**Europäisches Patentamt**

**European Patent Office**

**Office européen des brevets**

(11) Publication number: **0 044 733**

**B1**

(12) **EUROPEAN PATENT SPECIFICATION**

(45) Date of publication of patent specification: **23.01.85**

(51) Int. Cl.⁴: **B 62 D 5/06**

(21) Application number: **81303303.2**

(22) Date of filing: **17.07.81**

(54) **Vehicle hydraulic power steering system with means for controlling the operation of a power steering pump.**

(30) Priority: **18.07.80 JP 99049/80**
**24.07.80 JP 104781/80**

(43) Date of publication of application:
**27.01.82 Bulletin 82/04**

(45) Publication of the grant of the patent:
**23.01.85 Bulletin 85/04**

(84) Designated Contracting States:
**DE FR GB**

(56) References cited:
**DE-A-1 480 205**
**FR-A-2 454 397**
**GB-A-1 370 592**
**GB-A-1 475 250**
**GB-A-1 499 273**
**GB-A-1 557 659**
**GB-A-2 002 303**
**GB-A-2 024 123**

(73) Proprietor: **NISSAN MOTOR COMPANY, LIMITED**
**No.2, Takara-cho, Kanagawa-ku**
**Yokohama-shi Kanagawa-ken 221 (JP)**

(72) Inventor: **Yagi, Eiji**
**No. 1959 Kamitsuchidana**
**Ayase City (JP)**
Inventor: **Inoue, Naohiko**
**184-17, Kanazawa-cho**
**Kanazawa-ku Yokohama City (JP)**

(74) Representative: **Freed, Arthur Woolf et al**
**MARKS & CLERK 57-60 Lincoln's Inn Fields**
**London WC2A 3LS (GB)**

Courier Press, Leamington Spa, England.

## Description

The present invention relates to a power steering system for an automotive vehicle, and more specifically, to a power steering system with means for controlling the operation of a pump provided for supplying a pressurized working fluid to a power steering unit in an energy saving manner.

Generally, in the case of an automotive vehicle equipped with a power steering system, the steering operation is facilitated thanks to a reduced steering effort especially at a low vehicle speed or when the vehicle is at standstill. However, energy consumption is increased because an engine of the vehicle or an electric motor must be kept on driving the pump in order to continuously supply pressurized working fluid to the power steering system.

Therefore, it is preferable to provide a control means of the operation of the pump only when it is necessary, thus reducing the fuel consumption.

An example of a system of the nature mentioned hereinbefore is disclosed in British Patent Number 1 557 659. In this arrangement sensors are arranged to sense the movement of the steering wheel and the hydraulic pressure being delivered to the steering actuator from a pump, so that even when the steering wheel or member becomes stationary, the pump which supplies the actuator with the hydrualic fluid under pressure is rendered inoperative only when the hydraulic pressure is sensed as having fallen below a predetermined level.

However, in this arrangement the pressure sensor which senses the pressure of the hydraulic fluid is arranged to be reponsive to the pressure differential existing between the chambers of an actuator cylinder operatively connected to the road wheels of the vehicle.

With this arrangement the pressure sensor is subject to surges in pressure produced by shocks transmitted to the actuator cylinder from the road wheels when traversing a rough surface or the like. This induces a drawback that the pressure sensor is apt to, in the presence of a pressure surge, de-energize the relay via which the operation of the pump is maintained even though power assistance is still required.

Accordingly, it is an object of the present invention to provide a control arrangement for a power steering system which obviates the above mentioned drawback.

According to the present invention a hydraulic power steering system for a vehicle includes (a) a pump for supplying a pressurized working fluid, (b) a power steering unit supplied with the working fluid to assist a driver's steering effort through a steering wheel, the power steering unit including a servo mechanism and a control valve interposed between the pump and the servo mechanism, and (c) a control arrangement comprising, means for detecting a steering effort applied to the steering wheel, means for detecting the pressure of the working fluid supplied to the power steering unit, and control means connected to the steering effort detecting means and the pressure detecting means for producing an output signal for actuating the pump when the steering effort is applied to the steering wheel and/or the pressure of the working fluid is above a predetermined level, the control arrangement being characterized in that the pressure detecting means detects the pressure between the pump and the control valve.

The present invention will now be described in detail with reference to the accompanying drawings in which:—

Fig. 1 is a diagram showing a first embodiment of the present invention;

Fig. 2 is an example of a speed sensor used with the power steering system according to the present invention;

Fig. 3 is a cross sectional view of a power steering unit including a cross sectional view of a pump of the power steering system, in which the lower half shows a section including a center axis of a steering shaft and the upper half shows a section along the line A—A shown in the upper half and normal to the said axis of the steering shaft;

Flg. 4 is a partly sectional view of an example of a pressure transducer used with the power steering system according to the present invention;

Fig. 5 is a circuit diagram of the control means of the operation of the pump according to the present invention;

Fig. 6 is a diagram showing a modification of the first embodiment of the power steering system according to the present invention;

Fig. 7 is a circuit diagram of a control means of a second embodiment according to the present invention; and

Fig. 8 is a truth table showing a relationship between an outout logical state of the control means and input logical levels applied thereto.

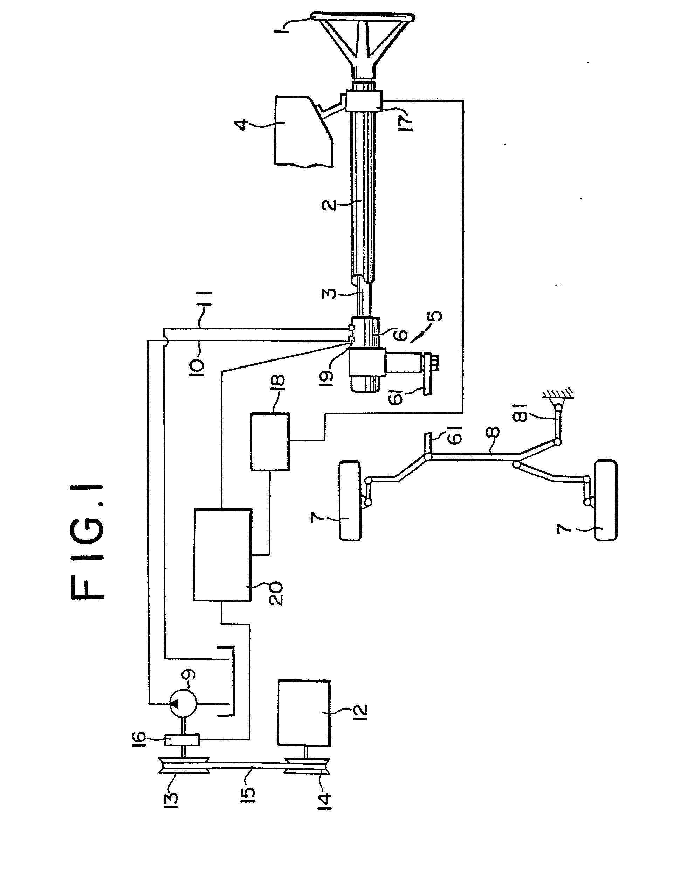

Fig. 1 shows a first embodiment according to the present invention. As shown in Fig. 1, a power steering system 5 which comprises a steering gear unit 6 (including a steering gear assembly, a control valve and power piston), a steering linkage 8 which controls the front wheels 7 of the vehicle and a pump 9 for supplying pressurized working fluid to the steering gear unit 6.

The steering gear unit 6 is connected to a steering wheel 1 via a steering shaft 3 enclosed in a steering column 2. The steering column in this arrangement is supported at the upper end thereof by a bracket extending from the vehicle dashpanel 4.

A pitman arm 61 operatively interconnects the steering gear 6 and the steering linkage 8. An idler arm 81 supportingly interconnects the steering linkage 8 and the body (chassis) of the vehicle.

Pressurized working fluid from the pump 9 is fed to the steering gear unit 6 through a feed conduit or pipe 10 and returned therefrom via a return or drain pipe 11.

In this arrangement an engine 12 is used to drive the pump 9 via a belt drive arrangement including a pulley 14 connected to the engine crankshaft and a pump pulley 13.

An electro-magnetic clutch operatively interconnects the pump 9 and the pump pulley 13.

In order to control the engagement/disengagement of the clutch means 16 a steering wheel rotational speed sensing means 17, a pressure detecting means 19 and a control means 20 for controlling the electromagnetic clutch 16 in response to the output signals from the speed sensing means 17 and the pressure detecting means 19, are provided.

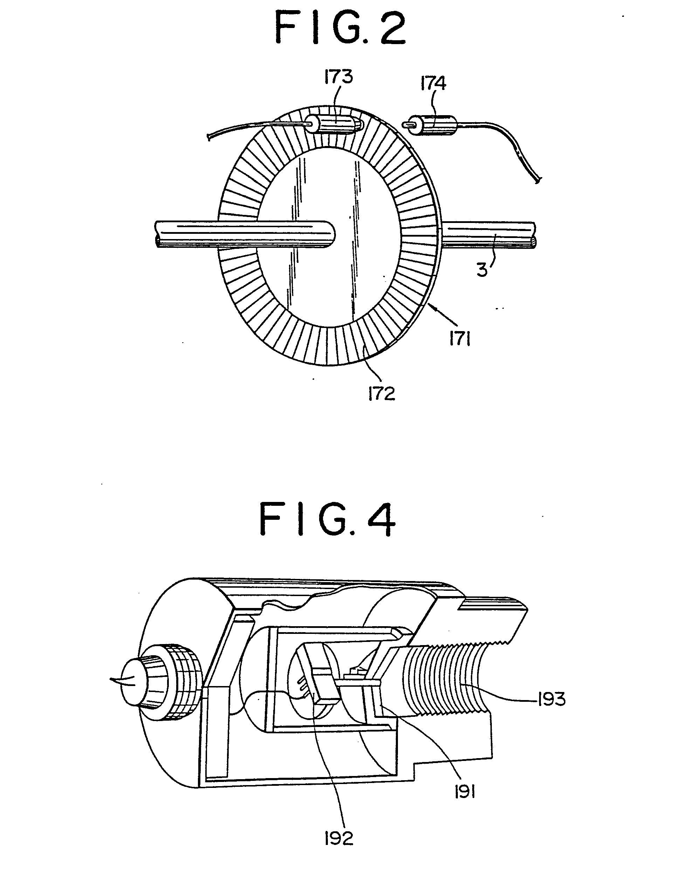

The speed sensing means or sensor preferably takes the form of a (a) a light coupled position transducer (shown in Fig. 2) and (b) a frequency to voltage converter 18 which converts an output pulse signal of the light coupled position transducer into a voltage signal. A transducer of the above nature is marketed by ONO SOKKI under the designation of "Rotary Encoder RP". This particular device comprises (a) a shutter disc 171 mounted concentrically on the steering shaft 3, and in which a plurality of radial slits 172 are formed about the periphery thereof, and (b) a light source/light sensor pair co-operating with the disc. The latter mentioned sensor pair includes, as shown, a light emitting device 173 and a photo sensitive device 174. The light emitting and photo sensitive devices 173, 174 are disposed diametrically opposite the periphery of the shutter disc 171. With this arrangement the photo sensitive device 174 produces a pulse signal the frequency of which is proportional to the rotational speed of the steering shaft 3.

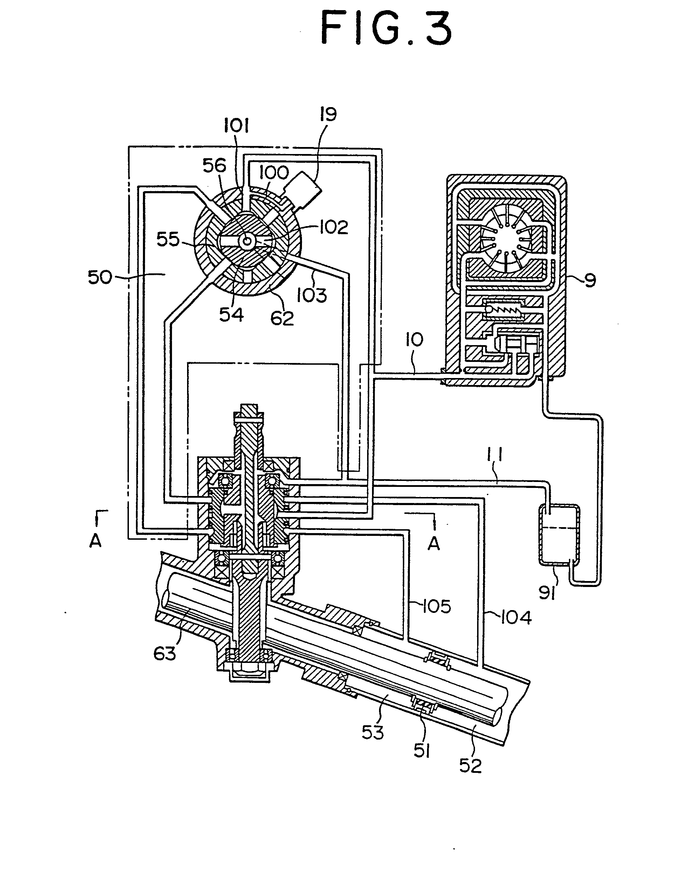

Fig. 3 shows an example of the arrangement of the pressure detecting means or sensor 19 and a steering gear unit 6. As shown, a pressure detecting means 19 is provided on a steering gear unit 6 of a rack and pinion type power steering system. This power steering system comprises a control valve 50 disposed within the steering gear unit 6 and a power piston 51 associated with a rack gear 63 of steering linkage. In accordance with the operation of the control valve 50, pressurized working fluid from pump 9 is selectively supplied to a left turn power chamber 52 or a right turn power chamber 53, thereby moving the power piston with the force of the pressurized working fluid in order to assist the manual steering operation.

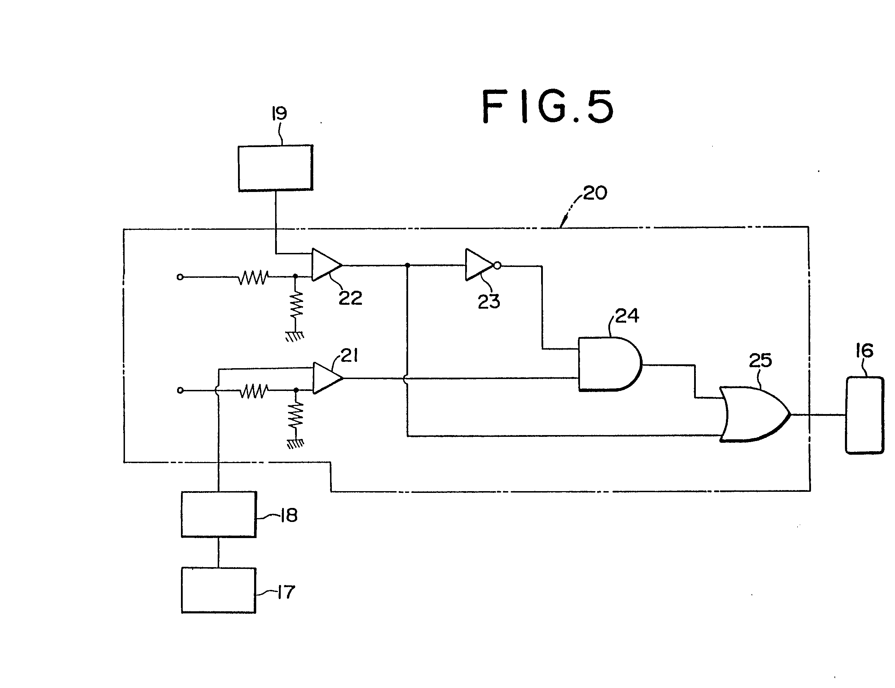

As shown in Fig. 4 the pressure detecting means 19 may preferably take the form of a known type pressure transducer such as a pressure sensor marketed by Tsukasa Sokken under the designation PLC pressure sensor. This pressure sensor incorporates therein a diaphragm 191 and a beam shaped metal thin film gauge 192 mechanically connected thereto, and produces an electric output signal which varies with a change in the resistance of the bridge circuit one of the resistances thereof is formed on the beam shaped thin film metal gauge 192, which occurs with the change in the pressure applied to the diaphragm 191 through a pressure chamber 193 formed therein. Referring again to Fig. 3, this pressure detecting means 19 is disposed on a housing 62 of the steering gear unit 6 and the pressure chamber 193 thereof is communicated with an inlet port 101 of the control valve 50 via a passageway 100 formed within the steering gear housing 62.

Referring now to Fig. 5, the control means 20 is explained. The control means 20 comprises a pair of comparators 21 and 22, NOT circuit 23, AND gate 24, and OR gate 25. The comparator 21 receives an output signal from the frequency to voltage converter 18 which converts the output pulse signal of the steering wheel rotational speed sensing means 17 at a first input terminal thereof. The comparator 21 produces a level 1 output signal when the voltage at the first terminal thereof is above a predetermined first reference level applied to a second input terminal thereof. In other words, it produces the level 1 output signal when the speed of the rotation of the steering shaft exceeds a predetermined value. Similarly, the comparator 22 receives an output signal of the pressure detecting means 19 at a first input terminal thereof and produces a level 1 output signal when the voltage at the first terminal thereof exceeds a predetermined second reference level applied to a second input terminal thereof. Viz., the comparator 22 produces a level 1 output signal when the pressure value detected by the pressure detecting means 19 exceeds a predetermined value.

The output of the comparator 21 is connected to one input of the AND gate 24. The output of the other comparator 22 is connected to the other input of the AND gate 24 through the NOT circuit 23 and also connected to one of inputs of the OR gate 25. The output of the AND gate 24 is connected to the other input of the OR gate 25. The OR gate 25 produces a level 1 output signal when at least one of the input terminals thereof receives a level 1 input signal. By this level 1 output signal of the OR gate 25, the electro-magnetic clutch 16 is engaged to drive the power steering pump 9.

The operation of the control means 20 is explained.

When at least one of the comparators 21 and 22 produces the 1 level output signal, in other words, when the steering angular speed is above a predetermined reference value or the pressure of the fluid is above a predetermined reference value, the OR gate 25 produces a level 1 output signal, thereby engaging the electromagnetic clutch 16. Thus the pump 9 is driven by the engine 12 and a pressurized working fluid is supplied to the power steering system 5.

Conversely, when both of the comparators 21 and 22 produce a 0 level output signal, the OR gate 25 produces a 0 level output signal, thereby disengaging the electro-magnetic clutch 16. The pump 9 is then stopped and the operation of the power steering system 5 is terminated.

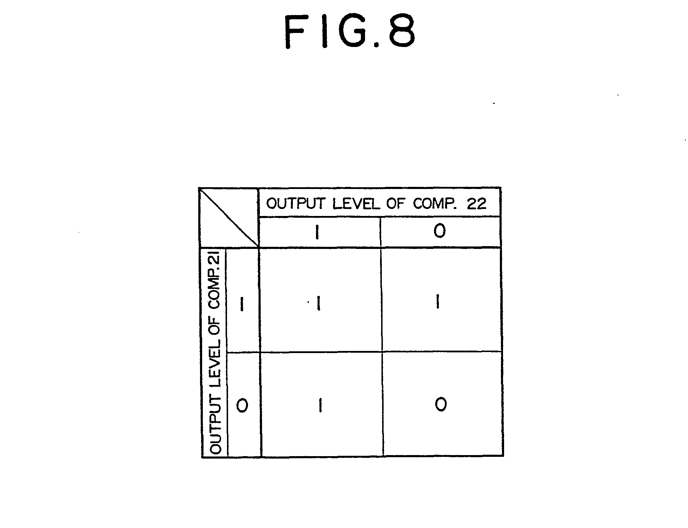

The relationship between the output signal level of the control means 20 and respective comparators 21 and 22 is illustrated in Fig. 8.

Assuming that the power steering pump is initially not driven. The pressure detecting means 19 therefore does not provide a high level output signal, and consequently the comparator 22 produces a 0 level output signal.

In this state, when the driver of the vehicle turns the steering wheel 1 at a speed of the rotation higher than a predetermined value, the comparator 21 produces the 1 level output signal. As a result, the control means 20 produces a 1 level output signal for engaging the electro-magnetic clutch 16 thereby starting the steering pump to supply the pressurized working fluid to the power steering system 5.

The operation of the power steering system 5 is explained hereinafter with reference to Fig. 3. When the pump 9 is operated, the pressurized fluid flows through the feed pipe 10 to the inlet port 101 of the control valve 50. However, as long as the driver's effort is not applied to the steering shaft 3, a valve shaft 54 remains in its normal position, the working fluid fed to the inlet port 101 of the control valve 50 bypasses around the power chambers 52, 53 and freely flows through a return port 102, an outlet port 103 of the control valve 50 and returns to a pump reservoir 91 through the return pipe 11.

However, when the driver's effort to turn the steering shaft 2 is applied, the valve shaft 54 slightly shifts against a valve body 55 due to a torsion of the torsion bar 56 disposed at a central portion of the control valve 50.

The torsion of the torsion bar 56 due to a steering load and the magnitude thereof, is proportional thereto.

As a result of the shift of the valve shift 54, a flow passage to the return port 102 within the valve body 55 is throttled and the pressurized working fluid is directed to one of the power chambers 52 and 53 through one of pipes 104 and 105 respectively connected thereto, thereby moving the power piston 51 to assist the driver's steering operation. Working fluid in the other one of the power chambers 52 and 53 is forced out through the control valve 50 and back to the pump reservoir 91. Thus, power assist proportional to the steering load is effected.

It is to be noted that during the above mentioned power assist operation, the pressure of the working fluid has a value greater than usual and this value varies in proportion to the steering load. Therefore, whether or not the steering load exists may be detected by means of the level of the pressure of the working fluid supplied to the power steering unit 6. In order to precisely discriminate the power assist operation of the power steering system, the reference level applied to the comparator 22 is selected so that the comparator 22 produces a level 1 output only when the steering load is applied.

During the normal steering operation where the steering wheel is turned at a speed higher than a predetermined angular speed, and during a turning of the vehicle where the steering load as a sustain force of the steered position is applied, the controller produces the 1 level output signal due to the 1 level output signal of the comparator 21 and/or the comparator 22.

On the other hand, when the steering wheel 1 is maintained at a straight ahead position or when the vehicle is at stand still and no steering load is applied, the comparators 21 and/or 22 no longer produce the level 1 output signal, causing the controller 20 to produce the 0 level output signal, thus stopping the operation of the power steering system 5.

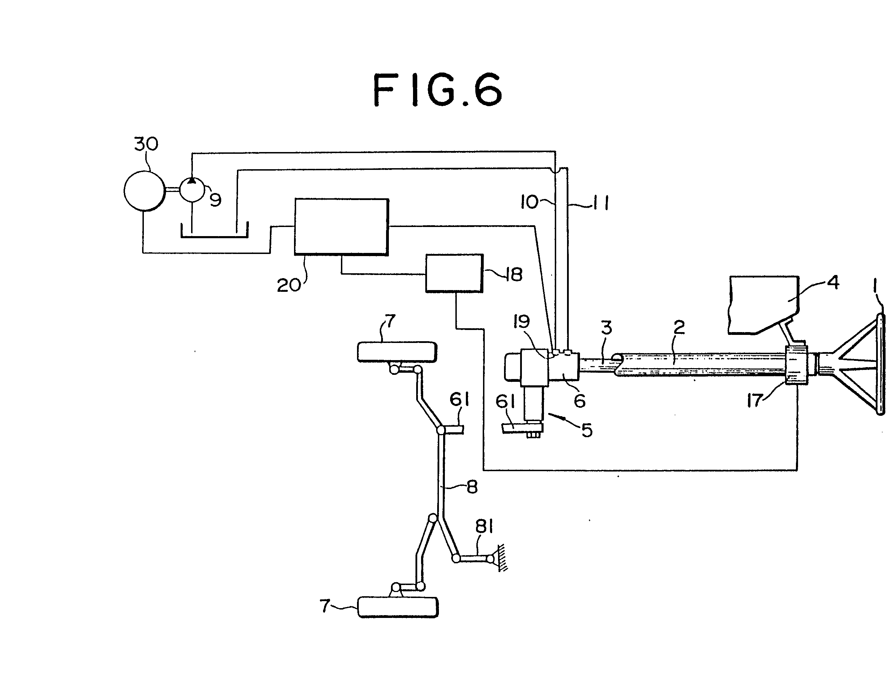

Fig. 6 shows a modification of the first embodiment according to the present invention.

This modification features that an electric motor 30 is used to drive the pump 9 in place of the engine 12.

With this arrangement, the output signal of the control means 20 is used to control the on and off operation of the motor 30.

In case an electric motor is used to drive the power steering pump, it is necessary to initiate the operation of the power steering system very quickly since the electric motor requires a predetermined time to reach operational speeds. In this respect the power steering system according to the present invention is quite advantageous due to a rapid response characteristic thereof.

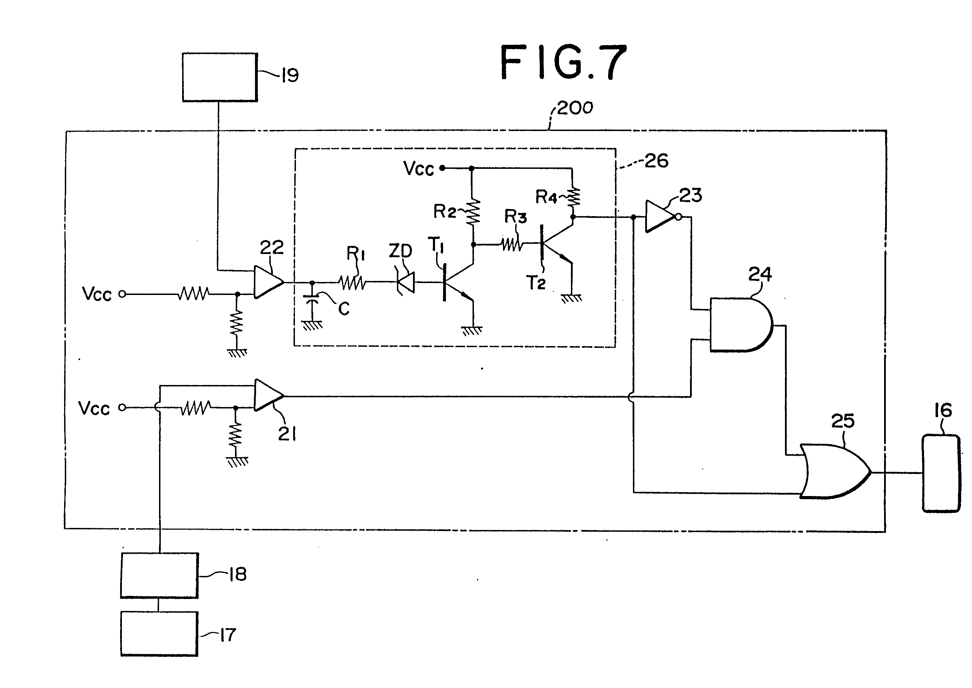

Fig. 7 shows a second embodiment according to the present invention which is different from the first by the provision of delay circuit 26 in a control means 200. The delay circuit 26 is provided between the output terminal of the comparator 22 and the input terminal of the NOT circuit 23. The delay circuit 26 comprises a pair of transistors $T_1$ and $T_2$ the emitters thereof are gounded and the collectors thereof are connected to a power supply respectively through resistors $R_2$ and $R_4$. The output signal of the comparator 22 is applied to a junction between a capacitor C, and a resistor $R_1$ and transmitted to a base of the transistor $T_1$ via the resistor $R_1$ and a zener diode ZD connected in series with each other. The other terminal of the capacitor C is grounded. The collector of the transistor $T_1$ is connected to a base of the transistor $T_2$ via a resistor $R_3$. The collector of the transistor $T_2$ is connected to the input terminal of the NOT circuit 23 and also to an input terminal of the OR gate 25. By means of the delay circuit 26 the input level of the NOT circuit 23 and the OR gate 25 is maintained at level 1 for a predetermined delay time after the termination of the output signal of the comparator 22. The delay time of the delay circuit 26 is determined in accordance with the product of the resistance value of the resistor $R_1$ and the capacitance of the capacitor C.

In the case of this control means 200, the output level of the OR gate 25 is maintained at the level 1 for a predetermined time after the steering load ceases to be applied and the operation of the power steering system is maintained during the above mentioned time. Thus, hunting of the power steering system operation viz., repetition of the on and off operation of the pump 9 within a very short period of time is prevented.

It will be appreciated from the foregoing that according to the present invention, the operation of a pump for supplying a working fluid of the power steering system is started when a steering wheel is turned at a rotational speed higher than a predetermined value and it is stopped when the pressure of the working fluid drops below a predetermined value due to the termination of the steering load. This reduces a fuel consumption of the vehicle and ensures improved operational characteristics of the power steering system. In addition, the steering wheel rotational speed sensor 17 used in the above embodiments can be replaced by a torque sensor or the like for sensing a torque value about the steering shaft if so desired.

## Claims

1. A hydraulic power steering system for a vehicle including (a) a pump (9) for supplying a pressurized working fluid, (b) a power steering unit (6) supplied with said working fluid to assist a driver's steering effort through a steering wheel (1), said power steering unit (6) including a servo mechanism and a control valve (50) interposed between said pump (9) and said servo mechanism, and (c) a control arrangement comprising: means (17) for detecting a steering effort applied to the steering wheel; means (19) for detecting the pressure of the working fluid supplied to said power steering unit; and control means (20) connected to said steering effort detecting means (17) and said pressure detecting means (19) for producing an output signal for actuating said pump (9) when the steering effort is applied to the steering wheel and/or the pressure of the working fluid is above a predetermined level, said control arrangement being characterized in that said pressure detecting means (19) detects the pressure between said pump (9) and said control valve (50).

2. A hydraulic power steering system as claimed in claim 1, wherein said steering effort detecting means is a rotational speed sensor which comprises: a light coupled position transducer including (a) a shutter disc (171) mounted on a shaft associated with said steering wheel, (b) a light source (173) and light sensor (174) pair associated with said shutter disc for producing an electric pulse signal indicative of the rotational speed of said shutter disc, and which is characterized by (c) a frequency to voltage converter (18) for converting said electric pulse signal into a voltage signal.

3. A hydraulic power steering system as claimed in claim 1, characterized in that said pressure detecting means comprises a pressure transducer incorporating therein: (a) a diaphragm (191) responsive to the pressure of said working fluid, and (b) a device responsive to the deflection of said diaphragm for outputting a signal indicative of the amount of deflection.

4. A hydraulic power steering system as claimed in claim 3, characterized in that said deflection responsive device comprises a metal thin film gauge (192) which is mechanically connected to said diaphragm (191).

5. A hydraulic power steering system as claimed in claim 1, characterized in that said pressure detecting means (19) is in communication with a single working fluid inlet port (101) of said control valve (50).

6. A hydraulic power steering system as claimed in claim 1, characterized in that said control means comprises: a first comparator (21) which comprises the output signal of said steering effort detecting means (17) representing a steering effort with a first reference level for producing an output signal when the voltage level of said steering effort representing signal is higher than said first reference level; a second comparator (22) which compares the output signal of said pressure detecting means (19) representing the working fluid pressure with a second reference signal for producing an output signal when the voltage level of said working fluid pressure representing signal is higher than said second reference level; a NOT circuit (23) having an input and an output, said input of the NOT circuit being connected to the output of said second comparator (22); an AND gate (24) having inputs and an output, said inputs of the AND gate being connected to the output of said first comparator (21) and the output of said NOT circuit (23); and an OR gate (25) having inputs and an output, said inputs of the OR gate being respectively connected to said outputs of the second comparator (22) and said AND gate (24).

7. A hydraulic power steering system as claimed in claim 6, characterized by maintaining means for maintaining the actuation of the pump (9) for a predetermined time after termination of the output signal of the pressure determining means (19), said maintaining means comprising a delay circuit (26) connected to said second comparator (22) for prolonging the output of said second comparator, said inputs of the NOT circuit (23) and the OR gate (25) being connected to the output of said delay circuit (26).

8. A vehicle hydraulic power steering system as claimed in claim 1, characterized in that said pump (9) is driven by an engine (12) of said vehicle, and an electromagnetic clutch (16) responsive to the output signal of said control means (20) operatively interconnects said pump (9) and said engine (12).

## Revendications

1. Système hydraulique de direction assistée pour vehicule incluant (a) une pompe (9) pour alimenter un fluide de travail sous pression, (b) une unité d'assistance (6) alimentée par ledit fluide de travail pour assister un effort de direction ou de braquage du conducteur transmis par un volant (1), ladite unité d'assistance (6) incluant un servo mécanisme et une vanne de contrôle (50) interposée entre ladite pompe (9) et ledit servo mécanisme, et (c) un dispositif de pilotage comprenant: des moyens (17) pour détecter un effort de braquage appliqué au volant; des moyens (19) pour détecter le pression du fluide de travail alimenté à ladite unité d'assistance; et des moyens de commande (20) connectés audit moyen (17) de détection de l'effort de braquage et audit moyen (19) de détection de pression pour produire un signal de sortie pour actionner ladite pompe (9) lorsque l'effort de braquage est appliqué au volant et/ou la pression du fluide de travail est au-dessus d'un niveau prédéterminé, ledit dispositif de pilotage étant caractérisé en ce que lesdits moyens (19) de détection de la pression détectent la pression entre ladite pompe (9) et ladite vanne de contrôle (50).

2. Système hydraulique de direction assistée selon la revendication 1, caractérisé en ce que les moyens de détection de l'effort de braquage précité comprennent un détecteur de vitesse de rotation qui comprend: un transducteur de position couplé à la lumière incluant (a) un disque obturateur (171) monté sur un arbre associé avec le volant, (b) une paire de source de lumière (173) et de détecteur de lumière (174) associés avec ledit disque obturateur pour produire un signal pulsé électrique indicatif de la vitesse de rotation du disque obturateur, et qui est caractérisé par (c) un convertisseur de fréquence en voltage (18) pour convertir ledit signal pulsé électrique en un signal de voltage.

3. Système hydraulic de direction assistée selon la revendication 1, caractérisé en ce que les moyens de détection de pression précités comprennent un transducteur de pression incorporant: (a) un diaphragme (191) répondant à la pression du fluide de travail, (b) un dispositif répondant à la déflection dudit diaphragme pour sortir un signal indicatif de la quantité de déflection.

4. Système hydraulique de direction assistée selon la revendication 3, caractérisé en ce que le dispositif précité répondant à la déflection comprend une jauge (192) en forme de pellicule mince métallique qui est mécaniquement connectée audit diaphragme (191).

5. Système hydraulique de direction assistée selon la revendication 1, caractérisé en ce que les moyens précités de détection de pression (19) sont en communication avec une entrée (101 de fluide de travail unique de la valve de commande précitée (50).

6. Système hydraulique de direction assistée selon la revendication 1, caractérisé en ce que les moyens de commande précités comprennent: un premier comparateur (21) qui compare le signal de sortie des moyens de détection de l'effort de braquage (17) représentant un effort de braquage avec un premier niveau de référence pour produire un signal de sortie lorsque le niveau de voltage du signal représentant l'effort de braquage est supérieur à celui dudit premier niveau de référence; un second comparateur (22) qui compare la signal de sortie desdits moyens de détection de pression (19) représentant la pression de fluide de travail avec une second signal de référence pour produire un signal de sortie lorsque le niveau de voltage dudit signal représentant la pression du fluide de travail est supérieure à celle dudit second niveau de référence; un circuit NON (23) ayant une entrée et une sortie, ladite entrée du circuit NON étant connectée à la sortie dudit second comparateur (22); une porte ET (24) ayant des entrées et une sortie, lesdites entrées de la porte TE étant connectées à la sortie dudit premier comparateur (21) et à la sortie dudit circuit NON (23); et une porte OU (25) ayant des entrées et une sortie, lesdites entrées de la porte OU étant respectivement connectées auxdites sorties du second comparateur (22) et de ladite porte ET (24).

7. Système hydraulique de direction assistée selon la revendication 6, caractérisé par des moyens de maintien pour maintenir l'activation de la pompe (9) pendant un temps prédéterminé après la fin du signal de sortie du moyen de détermination de pression (19), lesdits moyens de maintien comprenant un circuit retardé (26) connecté audit second comparateur (22) pour prolonger la sortie dudit second comparateur, lesdites entrées du circuit NON (23) et la porte OU (25) étant connectées à la sortie dudit circuit retardé (26).

8. Système hydraulique de direction assistée pour véhicule selon la revendication 1, caractérisé en ce que la pompe précitée (9) est commandée par un moteur (12) dudit véhicule, et un embrayage (16) électro-magnétique répondant au signal de sortie dudit moyen de commande (20) interconnecte de manière opératoire ladite pompe (9) et ledit moteur (12).

## Patentansprüche

1. Hydraulisches Hilfskraft-Fahrzeuglenksystem mit (a) einer Pumpe (9), die ein unter Druck stehendes Arbeitsfluid abgibt, (b) einer Hilfskraft-Lenkeinheit (6), der das Arbeitsfluid zugeführt ist und die die am Lenkrad (1) ausgeübten Lenkbewegungen des Fahrzeuglenkers unterstützt und die eine Servoeinrichtung und ein Steuerventil (50) aufweist, das zwischen der Pumpe (9) und der Servoeinrichtung angeordnet ist und mit (c) einer Steuerungsanordnung, bestehend aus einem Lenkdetektor (17) zum Feststellen einer am Lenkrad ausgeübten Lenkbewegung, einem Druckfühler (19) zu Feststellen des Drucks des der Hilfskraft-Lenkeinheit zugeführten Arbeitsfluides und einer mit dem Lenkdetektor (17) und dem Druckfühler (19) verbunden Steuereinrichtung (20), die ein die Pumpe (9) betätigendes Ausgangssignal abgibt, wenn am Lenkrad (1) Lenkbewegungen ausgeführt werden und/oder der Druck des Arbeitsfluides oberhalb eines vorgegebenen Pegels ist, dadurch gekennzeichnet, daß in der Steuerungsanordnung der Druckfühler (19) den Druck zwischen der Pumpe (9) und dem Steuerventil (50) feststellt.

2. Hydraulisches Hilfskanal-Lenksystem nach Anspruch 1, bei dem der Lenkdetektor (17) ein Drehgeschwindigkeitssensor ist, bestehend aus einem lichtgekoppelten Positionswandler mit (a) einer Stroboskopscheibe (171), die auf einer dem Lenkrad zugeordneten Welle befestigt ist, (b) einer Lichtquelle (173) und einem Lichtsensor (174) die der Stroboskopscheibe zugeordnet sind und die ein elektrisches Impulssignal erzeugen, das die Rotationsgeschwindigkeit der Stroboskopscheibe angibt, und das gekennzeichnet ist durch (c) einen Frequenz/Spannungs-Wandler (18) zum Umwandeln des elektrischen Impulssignals in ein Spannungssignal.

3. Hydraulisches Hilfskraft-Lenksystem nach Anspruch 1, dadurch gekennzeichnet, daß der Druckfühler einen Druckwandler aufweist, enthaltend (a) eine Membran (191), die auf den Druck des Arbeitsfluides anspricht und (b) eine auf die Auslenkung der Membran ansprechende Einrichtung, die ein Signal abgibt, das dem Grad der Membranauslenkung entspricht.

4. Hydraulisches Hilfskraft-Lenksystem nach Anspruch 3, dadurch gekennzeichnet, daß die auf die Membranauslenkung ansprechende Einrichtung eine Metalldünnfilm-Wandler (192) enthält, der mechanisch mit der Membran (191) verbunden ist.

5. Hilfskraft-Lenksystem nach Anspruch 1, dadurch gekennzeichnet, daß der Druckfühler (19) mit einem einzigen Arbeitsfluid-Einlaßkanal (101) des Steuerventils (50) in Verbindung steht.

6. Hydraulisches Hilfskraft-Lenksystem nach Anspruch 1, dadurch gekennzeichnet, daß die Steuereinrichtung enthält: einen ersten Komparator (21), der das Ausgangssignal des Lenkfühlers (17) mit einem ersten Vergleichssignal vergleicht, um ein Ausgangssignal abzugeben, wenn der Pegel des Lenkdetektors höher ist als der des Vergleichssignals; einen zweiten Komparator (22), der das Ausgangssignal des Druckfühlers (19) mit einem zweiten Vergleichssignal vergleicht und ein Ausgangssignal erzeugt, wenn der Spannungspegel des dem Arbeitsfluiddruck entsprechenden Signals höher ist als die zweite Vergleichsspannung; ein NICHT-Glied (23) mit einem Eingang und einem Ausgang, wobei der Eingang mit dem Ausgang des zweiten Komparators (22) verbunden ist; ein UND-Glied (24) mit Eingängen und einem Ausgang, wobei die Eingänge mit den Ausgängen des ersten Komparators (21) und des NICHT-Gliedes (23) verbunden sind; und ein ODER-Glied (25) mit Eingängen und einem Ausgang, wobei die Eingänge mit den Ausgängen des zweiten Komparators (22) und des UND-Gliedes (24) verbunden sind.

7. Hydraulisches Hilfskraft-Lenksystem nach Anspruch 6, gekennzeichnet durch eine Aufrechterhaltungseinrichtung zum Aufrechterhalten des Betriebs der Pumpe (9) für eine vorbestimmte Zeit nach dem Ende des Ausgangssignals des Druckfühlers (19), die einen Verzögerungskreis (26) aufweist, der mit dem zweiten Komparator (22) verbunden ist und das Ausgangssignal des zweiten Komparators verlängert, wobei die Eingänge des NICHT-Gliedes (23) und des ODER-Gliedes (25) mit dem Ausgang des Verzögerungskreises (26) verbunden sind.

8. Hydraulisches Hilfskraft-Lenksystem nach Anspruch 1, dadurch gekennzeichnet, daß die Pumpe (9) von einer Maschine (12) des Fahrzeugs angetrieben wird und eine elektromagnetische Kupplung (16) vorgesehen ist, die auf das Ausgangssignal der Steuerungseinrichtung (20) anspricht und die Pumpe (9) mit der Maschine (12) verbindet.

FIG.1

# FIG. 2

173    174

3

171

172

# FIG. 4

193

191

192

# FIG.3

# FIG.5

0 044 733

FIG.6

# FIG.7

0 044 733

# FIG.8

| | OUTPUT LEVEL OF COMP. 22 | |
|---|---|---|
| | I | O |
| OUTPUT LEVEL OF COMP.21 — I | I | I |
| OUTPUT LEVEL OF COMP.21 — O | I | O |

7